# EUROPÄISCHE PATENTSCHRIFT

(11) **EP 0 973 239 B1**
(45) Veröffentlichungstag und Bekanntmachung des Hinweises auf die Patenterteilung: **12.12.2001**
(21) Anmeldenummer: 99113436.2
(22) Anmeldetag: 10.07.1999
(51) Int. Cl.: H02H 3/087, H02H 3/16, H02H 7/00, H02H 3/08

(54) **Schutzschalteinrichtung**
Protective circuit
Circuit protecteur

(30) Priorität: 10.07.1998 DE 19831030; 29.07.1998 DE 19833984
(43) Veröffentlichungstag der Anmeldung: 19.01.2000
(73) Patentinhaber: Ellenberger & Poensgen GmbH, D-90518 Altdorf (DE)
(72) Erfinder: Fischer, Erich, 90518 Altdorf (DE); Naumann, Michael, 90537 Feucht (DE)
(74) Vertreter: Tergau & Pohl Patentanwälte

(56) Entgegenhaltungen:
- DD-A- 260 152
- DE-A- 4 136 238
- US-A- 5 546 264
- US-A- 5 642 251

## Beschreibung

Die Erfindung bezieht sich auf eine Schutzschalteinrichtung für einen Laststromkreis, mit mindestens zwei zwischen einem DC-Betriebsspannungseingang und einem Schaltausgang für die Last verlaufenden Strompfaden.

Eine derartige Schutzschalteinrichtung dient zum Schutz der Leitungen eines Laststromkreises sowie eines in diesem schaltbar angeordneten Verbrauchers gegen Kurzschluß oder Überlast. Dazu wird der Laststromkreis an die Außenleiter einer Versorgungs- oder Betriebsspannung über die Schutzschalteinrichtung angeschlossen, die den Last- oder Steuerstromkreis im Fehlerfall abschaltet. Ein diese Funktion ausübender mechanischer Überstromschutzschalter ist aus der DE 41 36 238 A1 bekannt. In Dokument US 5642251 wird zum einpoligen Abschalten eines DC Stromkreises ein MOS Leistungstransistor verwandt. Die Schutzschalteinrichtung oder das Schutzschaltgerät kann auch in einem Strompfad einen bedien- oder ansteuerbaren Schalter aufweisen, der im Fehlerfall öffnet und somit den Laststromkreis von der Betriebsspannung einpolig trennt.

Mittels eines derartigen, einpolig schaltenden Schutzschaltgerätes ist insbesondere im Falle eines Erdschlusses nicht sichergestellt, daß ein in den Laststromkreis geschalteter Verbraucher auch bei Auslösen der Schutzfunktion zuverlässig stillgesetzt oder abgeschaltet ist. So kann beispielsweise eine in den Laststromkreis geschaltete Maschine im Falle eines beidseitig des Schalters auftretenden Erdschlusses auch bei geöffnetem Schalter unbeabsichtigt anlaufen und somit im Falle einer fehlerbedingten Abschaltung nicht zuverlässig geschützt werden.

Der Erfindung liegt daher die Aufgabe zugrunde, eine Schutzschalteinrichtung der eingangs genannten Art anzugeben, die einen zuverlässigen Schutz eines Laststromkreises und dessen Komponenten im Fehlerfall, insbesondere auch im Falle eines Erdschlusses, gewährleistet.

Diese Aufgabe wird erfindungsgemäß gelöst durch die Merkmale des Anspruchs 1. Dazu ist in jedem Strompfad ein elektronischer Schalter vorgesehen, der mit einem Steuersystem zum Überwachen und allpoligen Abschalten des Laststromkreises verbunden ist. Als ansteuerbare elektronische Schalter sind insbesondere bipolare Transistoren, FET, z. B. MOS-Transistoren, und intelligente Leistungshalbleiter geeignet.

Die Schutzschalteinrichtung eignet sich besonders für ohmsche und induktive Lasten mit einer Nenn-Gleichspannung (DC) von 5V bis 300V, vorzugsweise 12V bis 60V, insbesondere von 24 V (DC), und einem maximalen Nennstrom von 20A, insbesondere 3A. Mittels der Schutzschalteinrichtung werden in einen Laststromkreis geschaltete Verbraucher oder Aktoren, z.B. ein Magnetventil, eine Magnetbremse oder ein Motor, in Maschinen und Anlagen allpolig und somit im Falle einer DC-Betriebsspannung zweipolig geschaltet. Darüber hinaus werden mittels der Schutzschalteinrichtung die elektrische Funktionsfähigkeit der Aktoren oder Verbraucher überwacht und die Leitungen des Laststromkreises zuverlässig geschützt.

Während der Schaltausgang der Schutzschalteinrichtung somit im Fehlerfall elektronisch allpolig abgeschaltet wird, erfolgt zweckmäßigerweise anschließend - und somit leistungslos - zusätzlich eine mindestens einpolige elektromechanische Trennung des Laststromkreises vom Betriebsspannungseingang. Dazu umfaßt die Schutzschalteinrichtung in mindestens einem Strompfad einen Schaltkontakt, der mit einem vom Steuersystem ansteuerbaren (ersten) Relais gekoppelt ist. Eine derartige, mindestens zweipolige elektronische Abschaltung des Laststromkreises verhindert zuverlässig den unbeabsichtigten Anlauf und/oder die Möglichkeit einer gefahrbringenden Bewegung einer in den Laststromkreis geschalteten Maschine, wie dies bei einem Erdschluß in einer Anlage auftreten kann.

Das Steuersystem der Schutzschalteinrichtung dient insbesondere zur Überwachung der Funktionsfähigkeit des Gesamtsystems zwischen dem Betriebsspannungseingang der Schutzschalteinrichtung und der Last im Laststromkreis. Sie dient außerdem zur Überwachung interner Fehler innerhalb der Schutzschalteinrichtung selbst. Darüber hinaus dient das Steuersystem zur Ansteuerung der elektronischen und gegebenenfalls der elektromechanischen Schalter zur Realisierung der Start- und Stopp-Funktionen des Aktors oder der EIN- und AUS-Funktion des Verbrauchers im Laststromkreis sowie zur allpoligen Abschaltung sowohl im fehlerfreien Betrieb (Normalbetrieb) als auch im Fehlerfall. Desweiteren dient das Steuersystem zur Ansteuerung von vorzugsweise optischen Anzeigeelementen zur Signalisierung des jeweiligen externen Fehlers und eines internen Fehlers sowie zur Meldung der Betriebsbereitschaft im fehlerfreien Zustand. Ferner dient das Steuersystem zur Ansteuerung eines Fehlermeldungsausgangs zum Anschluß einer externen Schaltzustandsanzeige sowie zur Fehlerspeicherung.

Dazu empfängt das Steuersystem sowohl im eingeschalteten als auch im ausgeschalteten Zustand der Schutzschalteinrichtung mindestens ein aus einem Betriebsparameter abgeleitetes Funktionssignal und erzeugt bei dessen Abweichung von einem vorgebbaren Referenz- oder Vergleichswert eine Fehlermeldung sowie ein Steuersignal zur Abschaltung des Laststromkreises. Zur Funktionsüberwachung werden insbesondere für den Schaltzustand der elektronischen Schalter charakteristische Betriebsparameter, wie z. B. deren Leckstrom oder Spannungspegel, sowie der über den oder jeden Strompfad fließende Laststrom herangezogen. Das Steuersystem ermittelt anhand einer Abweichung dieser Betriebsdaten oder Meßwerte von vorgegebenen Referenzwerten unter Berücksichtigung des Schaltzustands die Art eines aufgetretenen Fehlers und generiert ein entsprechendes Fehlersignal. In einem Anzeigefeld der Schutzschalteinrichtung werden verschiedenartige externe Fehler, insbesondere Drahtbruch, Kurzschluß oder Überlast, und interne Fehler mittels einer Anzahl von vorzugsweise unterschiedlich farbigen Leuchtdioden (LED) signalisiert. Auch kann die Signalisierung mittels einer einzelnen LED mit unterschiedlicher Blinkfrequenz erfolgen.

Zur Drahtbrucherkennung überwacht das Steuersystem vorteilhafterweise die Abweichung des in mindestens einem Strompfad erfaßten Stroms von einem Referenzwert. Unterschreitet z. B. im ausgeschalteten Zustand der über den oder jeden elektronischen Schalter fließende Leckstrom einen Mindeststromwert oder unterschreitet im eingeschalteten Zustand ein vorgegebener Minimalstrom eine Untergrenze, z. B. I < 50mA, so wird auf Drahtbruch im Laststromkreis erkannt und ein entsprechendes Fehlersignal sowie ein Steuersignal zur Abschaltung des Lastkreises ausgegeben. Alternativ kann auch ein Spannungspegel gemessen und mit einem entsprechenden Minimalpegel verglichen werden.

Zur Kurzschlußerkennung im ausgeschalteten Zustand überwacht das Steuersystem zweckmäßigerweise einen über den Laststromkreis geführten Prüfstrom. Im eingeschalteten Zustand wird bei einer Abweichung des in mindestens einem Strompfad erfaßten Laststroms von einem vorgegebenen Referenzwert auf Kurzschluß oder Überlast erkannt. Überschreitet der erfaßte Laststrom einen vorgegebenen Maximalwert, so generiert das Steuersystem wiederum eine entsprechende Fehlermeldung und ein Steuersignal zur Sperrung der elektronischen Schalter. Dabei erfolgt eine überlastabhängig verzögerte Abschaltung des Laststromkreises.

Die Ansteuerung des Steuersystems erfolgt vorteilhafterweise mittels eines vom Laststromkreis galvanisch getrennten Steuerstromkreises. Die galvanische Trennung des Steuerstromkreises vom Laststromkreis kann beispielsweise mittels eines Optokopplers realisiert werden. Vorteilhafterweise ist jedoch ein mit dem Steuersystem gekoppeltes (zweites) Relais in Form eines Kleinsignalrelais vorgesehen. Im Steuerstromkreis ist zweckmäßigerweise desweiteren eine Steuerstromanzeige, vorzugsweise in Form einer Leuchtdiode, vorgesehen. Ferner weist der Steuerstromkreis zweckmäßigerweise einen Verpolschutz, vorzugsweise in Form einer in diesen geschalteten Diode, auf. Zusätzlich kann ein mit dem Relais gekoppelter Schalter zur internen und/oder externen Rückmeldung eines Steuersignals vorgesehen sein.

In einer besonders zweckmäßigen Weiterbildung weist die Schutzschalteinrichtung eine vom Steuersystem angesteuerte Schalteinheit auf, die mit einem Bedienknopf zur Deaktivierung einer Fehlerspeicherung und mit einem ersten Schalter zur Aktivierung der externen Zustandsanzeige gekoppelt ist. Zur Kontaktierung der externen Zustandsanzeige mit der Schutzschalteinrichtung sind zwei Anschlüsse vorgesehen, die mittels des Schalters im Fehlerfall intern miteinander verbunden werden. Die Schalteinheit umfaßt zweckmäßigerweise einen zweiten Schalter, der zwischen das vorzugsweise monostabil ausgeführte erste Relais zur elektromechanischen Trennung des Laststromkreises und den Betriebsspannungseingang der Schutzschalteinrichtung geschaltet ist.

Die Ansteuerung der Schalteinheit erfolgt zweckmäßigerweise über einen mit dem Steuersystem verbundenen Auslöseschalter, beispielsweise einem magnetischen Schutzschalter des Typs 808 der Firma E-T-A, und ein mit diesem gekoppeltes Schaltschloß, das mit dem Bedienknopf und mit den beiden Schaltern zusammenwirkt. Zum Schutz des ersten Relais gegen Verpolung ist dieses vorteilhafterweise über eine dem zweiten Schalter vor- oder nachgeschaltete Diode an den Betriebsspannungseingang angeschlossen.

Zur Stromermittlung ist zweckmäßigerweise in mindestens einem Strompfad eine Strommeßvorrichtung in Form eines Meßshunts vorgesehen. Dieser ist mit Spannungsabgriffen versehen, die einerseits zur externen Stromerfassung mittels eines Voltmeters an jeweils einen Anschluß der Schutzschalteinrichtung und andererseits zur internen Verarbeitung des entsprechenden Funktionssignals an das Steuersystem geführt sind.

In vorteilhafter Ausgestaltung der Schutzschalteinrichtung ist auch der Betriebsspannungseingang verpolungssicher ausgeführt. Dazu ist zweckmäßigerweise der Auslöseschalter vorgesehen, dessen Antriebsspule anschlußseitig jeweils über zwei gegeneinander geschaltete Dioden an die Betriebsspannungseingänge angeschlossen ist. Zur extemen Ansteuerung ist ein Transistor vorgesehen, dessen Kollektor-Emitter-Strecke über zwei der vier Dioden des Verpolschutzes zwischen die Betriebsspannungseingänge geschaltet ist.

Der Auslöseschalter umfaßt dazu nach Art einer Grätz-Brücke geschaltete Dioden mit in einem Diodenzweig einem ansteuerbarer Transistor. Die im Gleichspannungs-Ausgang der Brücke liegende Antriebsspule ist zur Selbstunterbrechung über das Schaltschloß mit dem Schalter gekoppelt. Bei Verpolung erfolgt somit automatisch eine Selbstunterbrechung, während bei korrekter Polung durch Ansteuerung des Transistors auch eine aktive Unterbrechung erfolgen kann.

Die mit der Erfindung erzielten Vorteile bestehen insbesondere darin, daß mittels einer Schutzeinrichtung mit einem elektronisch allpolig schaltbaren Schaltausgang eine zuverlässige Abschaltung des zu schützenden Laststromkreises gewährleistet ist. Das interne elektronische Steuersystem zur Ansteuerung der in jedem Strompfad vorgesehenen elektronischen Schalter ermöglicht darüber hinaus eine zuverlässige Überwachung des Gesamtsystems auf externe sowie interne Fehler.

So wird mit einem solchen elektronischen Schaltverstärker oder Schutzschaltrelais für z. B. ohmsche und induktive Lasten mit einer Nennspannung von 24V (DC) und einem maximalen Nennstrom von 3A zusätzlich zum zuverlässigen Schutz durch ein zweipoliges Schalten der Aktoren in Maschinen und Anlagen auch eine besonders effektive Überwachung dieser Verbraucher hinsichtlich deren elektrischer Funktionsfähigkeit ermöglicht. Durch das zweipolige Abschalten des Schaltausgangs sowie die bedarfsweise zusätzliche elektromechanische Trennung des Laststromkreises von der Versorgungsspannung ist auch im Falle eines Erdschlusses ein unbeabsichtigtes Anlaufen und damit die Möglichkeit einer gefahrbringenden Bewegung einer in den Laststromkreis geschalteten Maschine zuverlässig verhindert.

Die Überwachung des Gesamtsystems mittels des Steuersystems der Schutzschalteinrichtung ermöglicht darüber hinaus eine differenzierte Fehlermeldung sowohl externer als auch interner Fehler durch eine entsprechende optische Anzeige. Desweiteren gewährleistet eine vom Steuersystem angesteuerte inteme Schalteinheit eine Fehlerspeicherung, die vorteilhafterweise nur durch manuelle Betätigung zurückgesetzt werden kann. Eine an der Schutzschalteinrichtung abgreifbare Schaltzustandsanzeige ermöglicht darüber hinaus den Anschluß einer externen Fehlermeldungsanzeige, beispielsweise für eine übergeordnete Leittechnik.

Nachfolgend wird ein Ausführungsbeispiel der Erfindung anhand einer Zeichnung näher erläutert. Darin zeigen:
- Fig. 1: in einem Blockschaltbild eine Schutzschalteinrichtung mit einem elektronischen Steuersystem zum allpoligen Abschalten eines Laststromkreises,
- Fig. 2: ein Schaltbild eines Verpolschutzes für den Betriebsspannungseingang der Schutzschalteinrichtung gemäß Fig. 1, und
- Fig. 3: eine Schaltungsvariante des Verpolschutzes gemäß Fig. 2.

Einander entsprechende Teile sind in beiden Figuren mit den gleichen Bezugszeichen versehen.

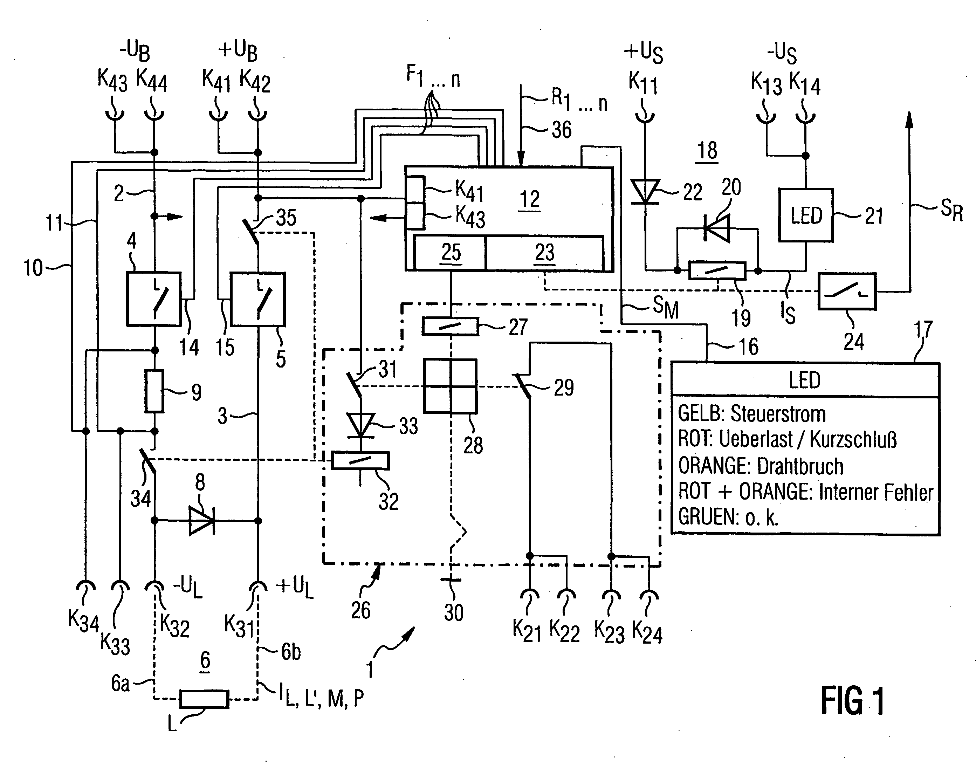

Die in Fig. 1 schematisch dargestellte Schutzschalteinrichtung 1, nachfolgend auch als Schutzschaltrelais bezeichnet, umfaßt zwei Strompfade 2,3 mit jeweils einem ansteuerbaren elektronischen Schalter 4 bzw. 5, beispielsweise mit jeweils einem Leistungstransistor, zwischen einem Betriebsspannungseingang (±) U_{B} und einem Schaltausgang (±) U_{L} zum Anschluß eines Laststromkreises 6 einer beispielsweise ohmschen oder induktiven Last L. Unter Last wird hierbei insbesondere ein Aktor in einer Maschine oder Anlage, beispielsweise ein Magnetventil, eine Magnetbremse oder ein Motor, mit einer Nennspannung von beispielsweise 24 V (DC) und einem maximalen Nennstrom von z. B. 3 A verstanden. Die Last L kann auch kapazitiv oder in einem einfachen Anwendungsfall eine Lampe sein.

Die Einspeisung der von einem (nicht dargestellten) Transformator mit zugeordnetem Netzteil gelieferte Betriebsspannung U_{B} in die Schutzschalteinrichtung 1 erfolgt über Anschlüsse K₄₁ bis K₄₄, z. B. in Form von Anschlußklemmen, von denen die Anschlüsse K₄₁ und K₄₃ zum Anschluß eines weiteren Schutzschaltgerätes oder Schutzschaltrelais an die Betriebsspannung U_{B} dienen. Zum Anschließen des Laststromkreises 6, d. h. dessen Leitungen 6a,6b an den Schalt- oder Lastausgang (±) U_{L} des Schutzschaltrelais 1 sind Anschlüsse K₃₁ und K₃₂ vorgesehen. Im Bereich dieser Anschlüsse K₃₁ und K₃₂ ist zwischen die beiden Strompfade 2 und 3 eine Freilaufdiode 8 geschaltet. In einen der beiden Strompfade - im Ausführungsbeispiel in den Strompfad 2 - ist ein Meßshunt 9 zur Strommessung geschaltet. Dazu ist dieser beidseitig mit Abgriffen versehen, die einerseits zur externen Strommessung mittels eines Voltmeters an Anschlüsse K₃₃ und K₃₄ der Schutzschalteinrichtung 1 geführt sind. Andererseits ist der Meßshunt 9 über Signalleitungen 10,11 mit einem Steuersystem 12 in Form einer Steuerelektronik des Schutzschaltrelais 1 verbunden. Der Meßshunt 9 weist beispielsweise einen Widerstandswert von 0,1 Ω bei einer Toleranz von 1 % auf.

Das Steuersystem 12 ist desweiteren über Steuer- und Signalleitungen 14,15 mit den elektronischen Schaltern 4 bzw. 5 verbunden. Femer ist das Steuersystem 12 eingangsseitig an die Anschlüsse K₄₁, K₄₃ und damit an die Betriebsspannung U_{B} angeschlossen. Außerdem ist das Steuersystem 12 ausgangsseitig über eine Signalleitung 16 mit einem Anzeigefeld 17 mit beispielsweise verschiedenfarbiger Leuchtdioden (LED) verbunden.

Zur Ansteuerung des Steuersystems 12 ist ein Steuerstromkreis 18 vorgesehen, der vom Laststromkreis 6 galvanisch getrennt ist. Dazu ist in den Steuerstromkreis 18 die Relaisspule eines (zweiten) Relais 19 geschaltet, dem zum Schutz des Steuerstromkreises 18 vor unzulässig hohen Spannungsimpulsen zweckmäßigerweise eine Freilaufdiode 20 parallelgeschaltet ist. Das vorzugsweise als Kleinsignalrelais ausgeführte Relais 19 ist einerseits über eine Steuerstromanzeige 21, beispielsweise in Form einer Leuchtdiode, mit Anschlüssen K₁₃ und K₁₄ für den Minuspol einer Steuerspannung U_{S} verbunden. Andererseits ist das Kleinsignalrelais 19 über eine in Durchlaßrichtung geschaltete Diode 22 mit einem Anschluß K₁₁ für den Pluspol der Steuerspannung U_{S} verbunden. Die Diode 22 dient dabei als Verpolschutz des Steuerstromkreises 18. Das Kleinsignalrelais 19 ist mit einem Ansteuereingang 23 des Steuersystems 12 über einen Kontakt gekoppelt. Außerdem ist das Relais 19 mit einem Rückmeldungsschalter oder Schaltkontakt 24 gekoppelt, über den bei fließendem Steuerstrom I_{S} ein Rückmeldungssignal S_{R} intern und/oder extern abrufbar ist.

Das Steuersystem 12 ist ausgangsseitig über einen Steuerausgang 25 mit einer Schalteinheit 26 verbunden. Diese umfaßt eine an den Steuerausgang 25 angeschlossene und mit einem Schaltschloß 28 zusammenwirkende Antriebsspule 27 eines Auslöseschalters. Das Schaltschloß 28 ist mit einem ersten Schalter 29 oder Schaltkontakt in Form eines Schließers gekoppelt. Desweiteren ist das Schaltschloß 28 mit einem extern betätigbaren Bedienknopf 30 zur manuellen Verriegelung des Schaltschlosses 28 gekoppelt. Femer ist das Schaltschloß 28 mit einem zweiten Schalter 31 gekoppelt, der mit einem ersten Relais 32 verbunden ist. Die Antriebsspule 27 und das Schaltschloß 28 sowie die Schalter 29, 31 bilden innerhalb der Schalteinheit 26 zusammen mit dem Bedienknopf 30 den Auslöseschalter.

Das Relais 32 ist über den zweiten Schalter 31 und eine als Verpolschutz dienende Diode 33 an den Pluspol der Betriebsspannung U_{B} angeschlossen. Das Relais 32 dient zur Betätigung jeweils eines Schaltkontaktes 34, 35 im Strompfad 2 bzw. 3. Die dargestellte Anordnung der Schaltkontakte 34 und 35 im jeweiligen Strompfad 2 bzw. 3 ist lediglich beispielhaft. So kann jeder der Schaltkontakte 34, 35 sowohl vor als auch hinter dem entsprechenden elektronischen Schalter 4 bzw. 5 vorgesehen sein. Auch kann anstelle zweier Schaltkontakte 34, 35 lediglich ein Schaltkontakt 34 oder 35 in einem der Strompfade 2 bzw. 3 vorgesehen sein.

Die Schutzschalteinrichtung 1 dient vorrangig zum allpoligen, d.h. im Ausführungsbeispiel zum zweipoligen, Schalten der Last L. Der Schutz bezieht sich insbesondere auf die Leitungen 6a, 6b des Laststromkreises 6. Desweiteren dient die Schutzschalteinrichtung 1 zur Überwachung der elektrischen Funktionsfähigkeit des in den Laststromkreis 6 als Last L geschalteten Verbrauchers. Sie dient ferner zur Signalisierung des Betriebszustands sowie zur Anzeige, insbesondere zur optischen Anzeige, von Lastkreisfehlern und deren Meldung über einen potentialfreien Signalkontakt, der durch den Schalter 29 realisiert ist. Dazu ist dieser mit Anschlüssen K₂₁ bis K₂₄ zum Anschluß einer externen Fehlermeldungsanzeige verbunden. Dabei sind die Anschlüsse K₂₁ und K₂₃ bei der dargestellten stromlos geschlossenen Stellung des Schalters 29 und manuell herausgezogenem oder elektronisch ausgelöstem Bedienknopf 30 intern miteinander elektrisch leitend verbunden.

Zur Überwachung und Fehlererkennung wertet das Steuersystem 12 aktuelle Betriebszustände aus und generiert einerseits im Fehlerfall Steuersignale zur zweipoligen elektronischen Abschaltung des Schaltausgangs (±) U_{L} sowie zur anschließenden, mindestens einpoligen elektromechanischen Trennung des Laststromkreises 6 vom Betriebsspannungseingang (±) U_{B}. Andererseits generiert das Steuersystem 12 Meldungssignale zur Ansteuerung verschiedenfarbiger Leuchtdioden für unterschiedliche Fehlerarten im Anzeigefeld 17. Darüber hinaus aktiviert das Steuersystem 12 über die Schalteinheit 26 die Fehlerspeicherung in Form des ausgelösten Bedienknopfes 30 sowie die integrierte Fehlermeldung zur externen Schaltzustandsanzeige über die Anschlüsse K₂₁ bis K₂₄.

Die Überwachung erfolgt dabei sowohl im eingeschalteten als auch im ausgeschalteten Zustand der über den Laststromkreis 6 an die Schutzschalteinrichtung 1 angeschlossenen Last L. Zur Überwachung und allpoligen Abschaltung im Fehlerfall sowie zur Fehlermeldung werden dem Steuersystem 12 eine Anzahl von Funktionssignalen F_{1...n} in Form von direkt erfaßten oder aus Meßwerten abgeleiteten Betriebsparametern zugeführt. Diese sind insbesondere der über die Leitungen 14, 15 von den elektronischen Schaltern 4 bzw. 5 gemeldete Schaltzustand, der aktuelle Wert des über den Lastkreis 6 fließenden Laststroms I_{L} im eingeschalteten Zustand bzw. des über den Lastkreis 6 fließenden Leckstrom I_{L}, im ausgeschalteten Zustand und über den Ansteuereingang 23 der Steuerpegel des Steuerstromkreises 18. So ist beispielsweise bei einer Steuerspannung U_{S} zwischen 0 V und 2,4 V (DC) der Steuerpegel "0", während der Steuerpegel "1" ist für eine Steuerspannung U_{S} zwischen 18 V und 32 V (DC). Der Steuerstrom I_{S} liegt beispielsweise im Bereich zwischen 5 mA und 10 mA bei einer maximalen Schaltfrequenz von beispielsweise 10 Hz.

Die Überwachung des Laststromkreises 6 und damit die Erkennung externer Fehler und die Erkennung interner Fehler innerhalb des Schutzschaltrelais 1 sowie die allpolige Abschaltung des Laststromkreises 6 und dessen bedarfsweise anschließende elektromagnetische Trennung vom Schaltausgang (±) U_{L} erfolgt anhand der unterschiedlichen betriebsbedingten Funktionssignale F_{1...n}, die mittels einer Zustandsmatrix oder Zustandslogik von dem Steuersystem 12 ausgewertet werden. So ist im störungsfreien Betrieb bei einem Steuerpegel "0" des Steuerstromkreises 18 der Last- oder Schaltausgang (±) U_{L} über die beiden elektronischen Schalter 4,5 zweipolig gesperrt. Dies entspricht dem ausgeschalteten Zustand oder Schaltzustand "AUS".

Bei diesem Schaltzustand ist der oder jeder Schaltkontakt 34,35 geschlossen, so daß der Schaltausgang (±) U_{L} und der Betriebsspannungseingang (±) U_{B} galvanisch miteinander verbunden sind. Das Steuersystem 12 erzeugt ein Meldesignal S_{M} für das Anzeigefeld 17, in dem beispielsweise eine grüne Leuchtdiode die Betriebsbereitschaft des Schutzschaltrelais 1 und die Fehlerfreiheit des Laststromkreises 6 anzeigt. Das Relais 32 ist dabei über die Diode 33 gegen Verpolung des Betriebsspannungseingangs U_{B} gesichert, da bei einer Verpolung das Relais 32 stromlos ist und somit die Schaltkontakte 34, 35 geöffnet sind. Außerdem ist, auch bei einer Verpolung, der Betätigungsknopf 30 in AUS-Stellung.

Wechselt der Steuerpegel im störungsfreien Betrieb von "0" auf "1", so werden die beiden elektronischen Schalter 4 und 5 vom Steuersystem 12 angesteuert und der Last- oder Schaltausgang (±) U_{L} wird zweipolig geschaltet. Bei diesem eingeschalteten Zustand oder Schaltzustand "EIN" ist der oder jeder Schaltkontakt 34, 35 weiterhin geschlossen. Zusätzlich zur Aktivierung der die Betriebsbereitschaft anzeigenden Leuchtdiode des Anzeigefeldes 17 ist auch die Steuerstromanzeige 21 aktiviert. Außerdem wird das Rückmeldungssignal S_{R} erzeugt, das als weiteres Funktionssignal Fₙ herangezogen werden kann. Dieser Zustand bleibt erhalten, solange der über den Meßshunt 9 erfaßte Laststrom I_{L} einen vorgegebenen Maximalwert, beispielsweise 3 A, nicht überschreitet oder einen vorgegebenen Minimalstrom I_{M}, beispielsweise 0,1 A, nicht unterschreitet. Die zum Vergleich herangezogenen und den jeweiligen Funktionssignalen F_{1...n} zugeordneten Referenzwerte R_{1...n} - dargestellt durch den Pfeil 36 - werden vorzugsweise innerhalb des Steuersystems 12 generiert.

Auf einen Kurzschluß oder Erdschluß und auf Überlast wird bei Anliegen des Steuerpegels "1" und somit im eingeschalteten Zustand erkannt, wenn der erfaßte Laststrom I_{L} den Maximalwert überschreitet. In diesem Fall wird zunächst der Schaltausgang (±) U_{L} durch Ansteuerung der elektronischen Schalter 4,5 vom Steuersystem 12 zweipolig gesperrt. Anschließend erfolgt mittels der über das Steuersystem 12 angesteuerten Schalteinheit 25 zusätzlich eine verzögerte elektromechanische Trennung des Laststromkreises 6 von der Schutzschalteinrichtung 1, indem der Schalter 31 geöffnet und somit das Relais 32 vom Betriebsspannungseingang (±) U_{B} getrennt wird. Die Verzögerungszeit beträgt z. B. eine Sekunde (1s). Durch die zusätzliche elektromechanische Trennung zumindest eines Strompfades 2,3 im Anschluß an eine allpolige elektronische Abschaltung wird zudem verhindert, daß bei einem Defekt des oder jedes elektronischen Schalters 4,5 ein auch im ausgeschalteten Zustand fließender Strom über den Laststromkreis 6 und damit über den Aktor oder Verbraucher L geführt wird.

Gleichzeitig wird über das Schaltschloß 28 der Schalter 29 geschlossen, so daß eine an die Anschlüsse K₂₁ bis K₂₄ angeschlossene externe Schaltzustandsanzeige aktiviert wird. Außerdem erhält die Anzeigeeinheit 17 über die Signalleitung 16 vom Steuersystem 12 ein Meldesignal S_{M} zur Aktivierung einer die Überlast oder den Kurzschluß anzeigenden Leuchtdiode (z. B. rote LED). Ferner wird mittels des Schaltschlosses 28 der Betätigungsknopf 30 in seine AUS-Stellung geführt.

Im ausgeschalteten Zustand wird zur Kurzschlußerkennung und/oder zur Drahtbrucherkennung vorteilhafterweise ein Prüfstrom I_{P} über den Laststromkreis 6 geführt, der mittels des Meßshunts 9 detektiert und vom Steuersystem 12 hinsichtlich einer Abweichung von einem entsprechenden Referenzwert Rₙ überwacht wird.

Auf Drahtbruch im Laststromkreis wird sowohl im ausgeschalteten Zustand - d.h. bei einem Steuerpegel "0" und deaktivierter Steuerstromanzeige 21 - als auch im eingeschalteten Zustand - d.h. bei einem Steuerpegel "1" und aktivierter Steuerstromanzeige 21 - erkannt, wenn der im "0"-Zustand ermittelte Leckstrom I_{L}, oder der im "1"-Zustand fließende Minimalstrom I_{M} den vorgegebenen Minimalwert unterschreitet. In diesem Fall wird sowohl im eingeschalteten als auch im ausgeschalteten Zustand der Schaltausgang (±) U_{L} zweipolig gesperrt. Zusätzlich erfolgt anschließend eine elektromechanische Trennung des Laststromkreises 6 mittels des oder jedes Schaltkontaktes 34,35. Die Fehlermeldung erfolgt wiederum einerseits durch Schließen des Schalters 29 und öffnen des Schalters 31, sowie andererseits durch Ansteuerung einer weiteren Leuchtdiode der Anzeigeeinheit 17 (z. B. orange LED). Ferner wird mittels des Schaltschlosses 28 der Betätigungsknopf 30 in seine AUS-Stellung geführt.

Bei Auftreten eines internen Fehlers innerhalb des Schutzschaltrelais, beispielsweise im Falle des Defekts eines elektronischen Schalters 4,5 oder eines Fehlers der Elektronik innerhalb des Steuersystems 12, erfolgt zusätzlich die Ansteuerung der z. B. roten Leuchtdiode des Anzeigefeldes 17. Ferner wird mittels des Schaltschlosses 28 der Betätigungsknopf 30 in seine AUS-Stellung geführt.

Unabhängig vom Schaltzustand bleibt das mit vom Anzeigefeld 17 dargestellte Fehlerbild erhalten und somit der Fehler bis zur Rücksetzung durch manuelle Betätigung des Betätigungsknopfes 30 gespeichert. Ebenso wie bei einem extemen oder internen Fehler, wird auch im Falle einer Verpolung eine Fehlermeldung erzeugt, indem z.B. keine der im Anzeigefeld 17 vorhandenen Leuchtdioden aktiviert wird. Ferner wird mittels des Schaltschlosses 28 der Betätigungsknopf 30 in seine AUS-Stellung geführt.

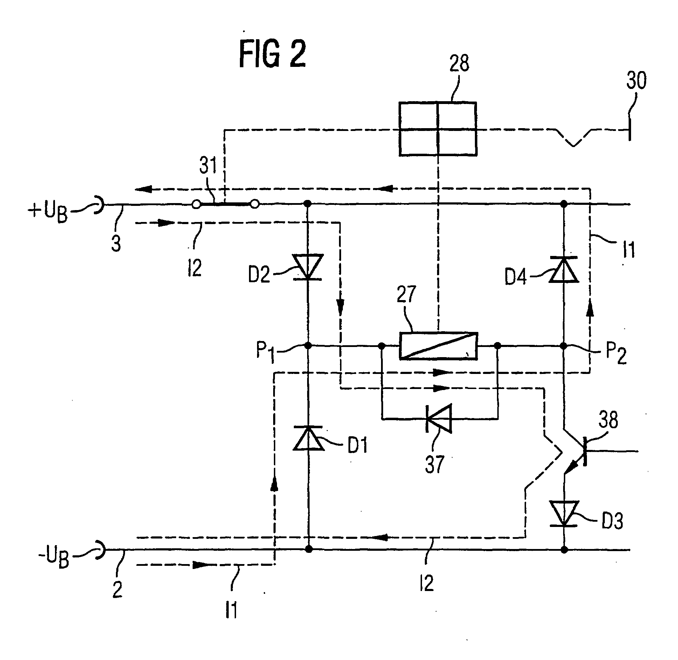

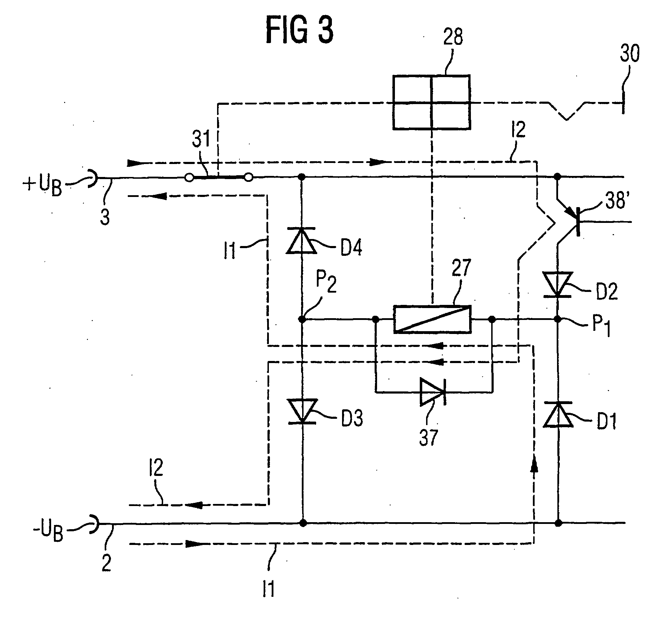

Ein bevorzugter Verpolschutz für den Betriebsspannungseingang (±) U_{B} ist in den Figuren 2 und 3 dargestellt. Dazu sind zwischen den Pluspol und den Minuspol der Betriebsspannung U_{B} zwei Reihenschaltungen mit jeweils zwei Dioden D1 bis D4 nach Art einer sogenannten Grätz-Brücke vorgesehen. Dabei sind innerhalb der Reihenschaltungen die beiden Dioden D1, D2 bzw. D3, D4 zueinander gegensinnig geschaltet. Der Verpolschutz umfaßt außerdem einen Relaisbaustein in Form der Antriebsspule 27, die zwischen die beiden Dioden D1, D2 bzw. D3, D4 geschaltet ist. Der Relaisbaustein 27, dem hier eine Freilaufdiode 37 parallel geschaltet ist, ist mit dem Schalter 31 gekoppelt, der im Ausführungsbeispiel im dem Pluspol der Betriebsspannung U_{B} zugeordneten Strompfad 3 vorgesehen ist. Der Relaisbaustein 27 ist darüber hinaus mittels eines Transistors 38 ansteuerbar, der im Falle des im Ausführungsbeispiel dargestellten npn-Transistors 38 zwischen die kathodenseitig mit den Strompfaden 2 und 3 verbundenen Dioden D3 bzw. D4 und damit in den Diodenzweig D3, D4 geschaltet ist. Dabei ist dessen Kollektor mit dem Relaisbaustein 27 verbunden. Im Falle eines pnp-Transistors 38' (Fig. 3) ist dieser zwischen die anodenseitig mit den Strompfaden 2 und 3 verbundenen Dioden D1 bzw. D2 und damit in den Diodenzweig D1, D2 geschaltet. Der Relaisbaustein oder die Antriebsspule 27 liegt dabei im Brückenausgang P_{1,2} und ist über das Schaltschloß 28 mit dem dem Pluspol der Betriebsspannung U_{B} zugeordneten Schalter 31 gekoppelt. Für den Verpolschutz umfaßt der Auslöseschalter somit zusätzlich zum Relaisbaustein bzw. zur Antriebsspule 27 und zum Schaltschloß 28 sowie zum Schalter 31 die Dioden D1 bis D4 und den Transistor 38, 38'.

Da sich die Schaltungen gemäß den Figuren 2 und 3 analog verhalten, wird nachfolgend die Wirkungsweise beispielhaft anhand der Variante gemäß Fig. 2 erläutert.

Bei einer Verpolung oder falschen Polung sind die Dioden D2 und D3 in Sperrichtung geschaltet, während die Dioden D1 und D4 leitend sind. Der Strom fließt somit in der gestrichelt dargestellten technischen Stromrichtung I₁ vom (-)U_{B}-Pol über die Diode D1 und die Antriebsspule 27 sowie über die Diode D4 zum (+)U_{B}-Pol, so daß der über das Schaltschloß 28 mit der Antriebsspule 27 gekoppelte Schalter 31 geöffnet und der Stromfluß unterbrochen wird. Demgegenüber erfolgt bei korrekter Polung eine Unterbrechung nur dann, wenn der Transistor 38 basisseitig über das Steuersystem 12 angesteuert wird. Die resultierende Stromrichtung I₂ ist ebenfalls gestrichelt dargestellt. Dabei sind die Stromrichtungen I_{1,2} durch die Antriebsspule 27 sowohl bei der automatischen Unterbrechung im Falle einer Verpolung als auch bei der mittels des Transistors 38 aktivierten Unterbrechung im Falle der korrekten Polung - im Gegensatz zu einer üblichen Brückenschaltung - gleich oder gleichsinnig.

### Bezugszeichenliste

- 1: Schutzschalteinrichtung
- 2,3: Strompfad
- 4,5: elektronischer Schalter
- 6: Laststromkreis
- 6a,6b: Leitung
- 8: Freilaufdiode
- 9: Meßshunt
- 10,11: Signalleitung
- 12: Steuersystem/Elektronik
- 14,15: Steuer- und Signalleitung
- 16: Meldesignalleitung
- 17: Anzeigefeld
- 18: Steuerstromkreis
- 19: (zweites) Relais
- 20: Freilaufdiode
- 21: Steuerstromanzeige/LED
- 22: Diode
- 23: Ansteuereingang
- 24: Schalter/Schaltkontakt
- 25: Steuerausgang
- 26: Schalteinheit
- 27: Antriebsspule
- 28: Schaltschloß
- 29: Schalter/Schließer
- 30: Bedienknopf
- 31: Schalter
- 32: (erstes) Relais
- 33: Diode
- 34,35: Schaltkontakt
- 36: Pfeil
- 37: Freilaufdiode
- 38: Transistor

- D1-D4: Diode
- Fn: Funktionssignal
- I_{L}: Laststrom
- I_{L'}: Leckstrom
- I_{M}: Minimalstrom
- I_{P}: Prüfstrom
- I_{S}: Steuerstrom
- Kₙ: Anschluß
- L: Last
- P_{1,2}: Brückenausgang
- Rₙ: Referenzwert
- S_{R}: Rückmeldungssignal
- S_{M}: Meldesignal
- U_{B}: Betriebsspannung
- (±)U_{B}: Spannungseingang
- UL: Schalt-/Lastspannung
- (±)U_{L}: Schaltausgang
- U_{S}: Steuerspannung

## Patentansprüche

1. Schutzschalteinrichtung für einen Laststromkreis (6), mit mindestens zwei zwischen einem DC-Betriebsspannungseingang (U_{B}) und einem Schaltausgang (U_{L}) für die Last (L) verlaufenden Strompfaden (2,3),
- wobei in jedem Strompfad (2,3) ein elektronischer Schalter (4 bzw. 5) vorgesehen ist, von denen jeder mit einem Steuersystem (12) verbunden ist, das sowohl im eingeschalteten als auch im ausgeschalteten Zustand mindestens ein Funktionssignal (Fₙ) empfängt und bei dessen Abweichung von einem vorgegebenen Referenzwert (Rₙ) die elektronischen Schalter (4,5) zur Sperrung des Schaltausgangs (U_{L}) derart ansteuert, dass im Fehlerfall eine allpolige Abschaltung des Laststromkreises (6) erfolgt, und
- wobei ein Steuerstromkreis (18) vorgesehen ist, der das Steuersystem (12) zum allpoligen EIN- bzw. AUS-Schalten der Last (L) ansteuert.

2. Schutzschalteinrichtung nach Anspruch 1,
**dadurch gekennzeichnet,**
**dass** in mindestens einem Strompfad (2,3) ein Schaltkontakt (34 bzw. 35) vorgesehen ist, der mit einem vom Steuersystem (12) ansteuerbaren ersten Relais (32) gekoppelt ist.

3. Schutzschalteinrichtung nach Anspruch 2,
**dadurch gekennzeichnet,**
**dass** das Relais (32) über einen Verpolschutz (33) an den Betriebsspannungseingang (U_{B}) angeschlossen ist.

4. Schutzschalteinrichtung nach einem der Ansprüche 1 bis 3,
**dadurch gekennzeichnet,**
**dass** das Steuersystem (12) zur Drahtbrucherkennung im ausgeschalteten Zustand eine Abweichung eines in mindestens einem Strompfad (2,3) erfassten Leckstroms (I_{L}') von einem Referenzwert (Rₙ) überwacht.

5. Schutzschalteinrichtung nach einem der Ansprüche 1 bis 4,
**dadurch gekennzeichnet,**
**dass** das Steuersystem (12) zur Drahtbrucherkennung im eingeschalteten Zustand eine Abweichung eines in mindestens einem Strompfad (2) erfassten Minimalstroms (I_{M}) von einem Referenzwert (Rₙ) überwacht.

6. Schutzschalteinrichtung nach einem der Ansprüche 1 bis 5,
**dadurch gekennzeichnet,**
**dass** das Steuersystem (12) zur Kurzschlusserkennung im ausgeschalteten Zustand einen über den Laststromkreis (6) geführten Prüfstrom (I_{P}) überwacht.

7. Schutzschalteinrichtung nach einem der Ansprüche 1 bis 6,
**dadurch gekennzeichnet,**
**dass** das Steuersystem (12) im eingeschalteten Zustand mindestens den in einem Strompfad (2,3) erfassten Strom (I_{L},I_{M}) als Funktionssignal (Fₙ) empfängt.

8. Schutzschalteinrichtung nach einem der Ansprüche 1 bis 7,
**dadurch gekennzeichnet,**
**dass** das Steuersystem (12) zur Kurzschluss- und/oder Überlasterkennung eine Abweichung des in mindestens einem Strompfad (2,3) erfassten Laststroms (I_{L}) von einem Referenzwert (Rₙ) überwacht.

9. Schutzschalteinrichtung nach 8,
**dadurch gekennzeichnet,**
**dass** bei Überlasterkennung eine überlastabhängig verzögerte Abschaltung des Laststromkreises (6) erfolgt.

10. Schutzschalteinrichtung nach einem der Ansprüche 1 bis 9,
**dadurch gekennzeichnet,**
**dass** der Steuerstromkreis (18) zur Ansteuerung des Steuersystems (12) vom Laststromkreis (6) galvanisch getrennt ist.

11. Schutzschalteinrichtung nach Anspruch 10,
**dadurch gekennzeichnet,**
**dass** der Steuerstromkreis (18) eine zwischen dessen Steuereingänge (U_{S}) geschaltete Steuerstromanzeige (21) sowie einen Verpolschutz (22) aufweist.

12. Schutzschalteinrichtung nach Anspruch 10 oder 11,
**dadurch gekennzeichnet,**
**dass** zur galvanischen Trennung ein zweites Relais (19) vorgesehen ist.

13. Schutzschalteinrichtung nach Anspruch 12,
**dadurch gekennzeichnet,**
**dass** das Relais (19) mit einem Rückmeldungsschalter (24) gekoppelt ist

14. Schutzschalteinrichtung nach einem der Ansprüche 1 bis 13,
**gekennzeichnet durch**
eine vom Steuersystem (12) angesteuerte Schalteinheit (26) mit einer manuell rücksetzbaren Fehlerspeicherung (30) und mit einem ersten Schalter (29) zur Aktivierung einer externen Zustandsanzeige.

15. Schutzschalteinrichtung nach Anspruch 14,
**dadurch gekennzeichnet,**
**dass** die Schalteinheit (26) einen zweiten Schalter (31) aufweist, der zwischen das erste Relais (32) zur elektromechanischen Trennung des Laststromkreises (6) und den Betriebsspannungseingang (U_{B}) geschaltet ist.

16. Schutzschalteinrichtung nach Anspruch 14 oder 15,
**dadurch gekennzeichnet,**
**dass** die Schalteinheit (26) ein mit dem Steuersystem (12) verbundenes drittes Relais (27) und ein mit diesem gekoppeltes Schaltschloss (28) umfaßt, das mit einem Bedienknopf (30) und mit den Schaltern (29,31) zusammenwirkt.

17. Schutzschalteinrichtung nach einem der Ansprüche 1 bis 16,
**dadurch gekennzeichnet,**
**dass** das Steuersystem (12) bei Normalbetrieb, bei einem Drahtbruch im Laststromkreis (12), bei einem Kurzschluss und/oder bei Überlast mindestens eine Leuchtdiode (LED), vorzugsweise eine Anzahl von verschiedenfarbigen Leuchtdioden (LED), ansteuert.

18. Schutzschalteinrichtung nach einem der Ansprüche 1 bis 17,
**dadurch gekennzeichnet,**
**dass** in mindestens einem Strompfad (2,3) eine Strommessvorrichtung, vorzugsweise ein Mess-Shunt (9), vorgesehen ist.

19. Schutzschalteinrichtung nach einem der Ansprüche 1 bis 18,
**dadurch gekennzeichnet,**
**dass** als Verpolschutz ein Auslöseschalter mit nach Art einer Grätz-Brücke geschalteten Dioden (D1 bis D4) vorgesehen ist, wobei in einen Diodenzweig (D1,D2;D3,D4) ein ansteuerbarer Transistor (38;38') geschaltet ist, und wobei im Brückenausgang (P_{1,2}) eine Antriebsspule (27) liegt, die zur Selbstunterbrechung über ein Schaltschloss (28) mit einem Schalter (31) gekoppelt ist.

20. Schutzschalteinrichtung nach Anspruch 19,
**dadurch gekennzeichnet,**
**dass** bei korrekter Polung durch Ansteuerung des Transistors (38,38') eine aktive Unterbrechung erfolgt.

## Claims

1. Circuit-breaker device for a load circuit (6), having at least two current paths (2, 3) running between a DC operating voltage input (U_{B}) and a switching output (U_{L}) for the load (L),
- where each current path (2, 3) contains an electronic switch (4 or 5), each of which is connected to a control system (12) which receives at least one function signal (Fₙ) both in the turned-on state and in the turned-off state and, in the event of said function signal differing from a prescribed reference value (Rₙ), actuates the electronic switches (4, 5) to block the switching output (U_{L}) such that all poles of the load circuit (6) are disconnected in the event of a fault, and
- where a control circuit (18) is provided which actuates the control system (12) to turn all poles of the load (L) ON and OFF.

2. Circuit-breaker device according to Claim 1,
**characterized**
**in that** at least one current path (2,3) contains a switching contact (34 or 35) which is coupled to a first relay (32) which can be actuated by the control system (12).

3. Circuit-breaker device according to Claim 2,
**characterized**
**in that** the relay (32) is connected to the operating voltage input (U_{B}) via a polarity-reversal protection element (33).

4. Circuit-breaker device according to one of Claims 1 to 3,
**characterized**
**in that** the control system (12) monitors a difference between a leakage current (I_{L}') detected in at least one current path (2, 3) and a reference value (Rₙ) in order to detect wire breakage in the turned-off state.

5. Circuit-breaker device according to one of Claims 1 to 4,
**characterized**
**in that** the control system (12) monitors a difference between a minimum current (I_{M}) detected in at least one current path (2) and a reference value (Rₙ) in order to detect wire breakage in the turned-on state.

6. Circuit-breaker device according to one of Claims 1 to 5,
**characterized**
**in that** the control system (12) monitors a test current (I_{P}) routed via the load circuit (6) in order to detect a short circuit in the turned-off state.

7. Circuit-breaker device according to one of Claims 1 to 6,
**characterized**
**in that** the control system (12) receives at least the current (I_{L}, I_{M}) detected in one current path (2, 3) as function signal (Fₙ) in the turned-on state.

8. Circuit-breaker device according to one of Claims 1 to 7,
**characterized**
**in that** the control system (12) monitors a difference between the load current (I_{L}) detected in at least one current path (2, 3) and a reference value (Rₙ) in order to detect a short circuit and/or overload.

9. Circuit-breaker device according to Claim 8,
**characterized**
**in that**, in the event of an overload being detected, the load circuit (6) is disconnected with a delay based on the overload.

10. Circuit-breaker device according to one of Claims 1 to 9,
**characterized**
**in that** the control circuit (18) for actuating the control system (12) is DC-isolated from the load circuit (6).

11. Circuit-breaker device according to Claim 10,
**characterized**
**in that** the control circuit (18) has a control current indicator (21) connected between its control inputs (U_{S}) and also a polarity-reversal protection element (22).

12. Circuit-breaker device according to Claim 10 or 11,
**characterized**
**in that** a second relay (19) is provided for DC-isolation.

13. Circuit-breaker device according to Claim 12,
**characterized**
**in that** the relay (19) is coupled to an acknowledgement switch (24).

14. Circuit-breaker device according to one of Claims 1 to 13,
**characterized by**
a switching unit (26), actuated by the control system (12), having a manually resettable fault storage element (30) and having a first switch (29) for activating an external state indicator.

15. Circuit-breaker device according to Claim 14,
**characterized**
**in that** the switching unit (26) has a second switch (31) which is connected between the first relay (32) for electromechanical isolation of the load circuit (6) and the operating voltage input (U_{B}).

16. Circuit-breaker device according to Claim 14 or 15,
**characterized**
**in that** the switching unit (26) comprises a third relay (27), connected to the control system (12), and a latch (28) which is coupled to said third relay and interacts with a control knob (30) and with the switches (29, 31).

17. Circuit-breaker device according to one of Claims 1 to 16,
**characterized**
**in that** the control system (12) actuates at least one light-emitting diode (LED), preferably a number of differently coloured light-emitting diodes (LED), for normal operation, for a wire breakage in the load circuit (12), for a short circuit and/or for overload.

18. Circuit-breaker device according to one of Claims 1 to 17,
**characterized**
**in that** at least one current path (2, 3) contains a current-measuring apparatus, preferably a measurement shunt (9).

19. Circuit-breaker device according to one of Claims 1 to 18,
**characterized**
**in that** the polarity-reversal protection element provided is a trip switch having diodes (D1 to D4) connected in the manner of a Grätz bridge, with an actuatable transistor (38; 38') being connected in one diode path (D1, D2; D3, D4), and with the bridge output (P_{1,2}) containing a drive coil (27) which is coupled to a switch (31) via a latch (28) for the purposes of auto-interruption.

20. Circuit-breaker device according to Claim 19,
**characterized**
**in that**, with correct polarity, active interruption is effected by actuating the transistor (38, 38').

## Revendications

1. Dispositif de commutation de protection pour un circuit de charge (6), comportant au moins deux voies de circulation de courant (2, 3) qui s'étendent entre une entrée (U_{B}) pour une tension continue de fonctionnement et une sortie de fonctionnement (U_{L}) pour la charge (L),
- dans lequel il est prévu dans chaque voie de circulation de courant (2, 3) des interrupteurs électroniques (4 et 5) dont chacun est relié à un système de commande (12), qui reçoit au moins un signal de fonction (Fₙ) aussi bien à l'état branché qu'à l'état débranché et, dans le cas d'un écart de ce signal par rapport à une valeur de référence prédéterminée (Rₙ), commande les interrupteurs électroniques (4, 5) pour bloquer la sortie de commutation (U_{L}) de telle sorte que dans le cas de défauts, il se produit un débranchement du circuit de charge (6) au niveau de tous les pôles, et
- dans lequel il est prévu un circuit de commande (18), qui commande le système de commande (12) pour réaliser le branchement ou le débranchement de la charge (L), au niveau de tous les pôles.

2. Dispositif de commutation de protection selon la revendication 1, **caractérisé en ce que** dans au moins une voie de circulation de courant (2, 3), il est prévu un contact de commutation (34 ou 35), qui est couplé à un premier relais (32), qui peut être commandé par un système de commande (12).

3. Dispositif de commutation de protection selon la revendication 2, **caractérisé en ce que** le relais (32) est raccordé à l'entrée de tension de fonctionnement (U_{B}) par l'intermédiaire d'un système (33) de protection contre une inversion de polarité.

4. Dispositif de commutation de protection selon l'une des revendications 1 à 3, **caractérisé en ce que** le système de commande (12) servant à identifier une rupture de fil contrôle, à l'état débranché, un écart d'un courant de charge (I_{L'}) détecté dans au moins une voie de circulation de courant (2, 3) par rapport à une valeur de référence (Rₙ).

5. Dispositif de commutation de protection selon l'une des revendications 1 à 4, **caractérisé en ce que** le système de commande (12) servant à identifier une rupture de fil contrôle, à l'état branché, un écart d'un courant minimum (I_{M}) détecté dans au moins une voie de circulation de courant (2), par rapport à une valeur de référence (Rₙ).

6. Dispositif de commutation de protection selon l'une des revendications 1 à 5, **caractérisé en ce que** le système de commande (12) contrôle un courant de contrôle (I_{P}) transmis par l'intermédiaire du circuit de charge (6), pour l'identification d'un court-circuit, à l'état débranché.

7. Dispositif de commutation de protection selon l'une des revendications 1 à 6, **caractérisé en ce que** le système de commande (12) reçoit, à l'état branché, au moins le courant (I_{L}, I_{M}) détecté dans une voie de circulation de courant (2, 3), en tant que signal de fonction (Fₙ).

8. Dispositif de commutation de protection selon l'une des revendications 1 à 7, **caractérisé en ce que** le système de commande (12) contrôle, pour l'identification d'un court-circuit et/ou d'une surcharge, un écart du courant de charge (I_{L}) détecté dans au moins une voie de circulation de courant (2, 3) par rapport à une valeur de référence (Rₙ).

9. Dispositif de commutation de protection selon la revendication 8, **caractérisé en ce que** dans le cas d'une identification d'une surcharge, il se produit un débranchement, retardé en fonction de la surcharge, du circuit de courant de charge (6).

10. Dispositif de commutation de protection selon l'une des revendications 1 à 9, **caractérisé en ce que** le circuit de commande (18) servant à commander le système de commande (12) est séparé galvaniquement du circuit de charge (6).

11. Dispositif de commutation de protection selon la revendication 10, **caractérisé en ce que** le circuit de commande (18) possède un dispositif d'affichage de courant de commande (21), qui est branché entre ses entrées de commande (Uₛ), ainsi qu'une unité (22) de protection contre une inversion de polarité.

12. Dispositif de commutation de protection selon la revendication 10 ou 11, **caractérisé en ce qu'**un second relais (19) est prévu pour la séparation galvanique.

13. Dispositif de commutation de protection selon la revendication 12, **caractérisé en ce que** le relais (19) est couplé à un interrupteur (24) de signalisation en retour.

14. Dispositif de commutation de protection selon l'une des revendications 1 à 13, **caractérisé par** une unité de commutation (26), qui est commandée par le système de commande (12) et comporte une unité (30) de mémorisation d'erreur, qui peut être ramenée manuellement à zéro, et un premier interrupteur (29) pour activer un dispositif externe d'affichage d'état.

15. Dispositif de commutation de protection selon la revendication 14, **caractérisé en ce que** l'unité de commutation (26) comprend un second interrupteur (31), qui est branché entre le premier relais (32) servant à réaliser la séparation électromagnétique du circuit de charge (6) et l'entrée (U_{B}) pour la tension de fonctionnement.

16. Dispositif de commutation de protection selon la revendication 14 ou 15, **caractérisé en ce que** l'unité de commutation (26) comprend un troisième relais (27), qui est relié au système de commande (12), et un circuit de verrouillage (28) couplé à ce relais et qui coopère avec un bouton de commande (30) et les interrupteurs (29, 31).

17. Dispositif de commutation de protection selon les revendications 1 à 16, **caractérisé en ce que** dans le fonctionnement normal, dans le cas d'une rupture de fil dans le circuit de charge (12), dans le cas d'un court-circuit et/ou dans le cas d'une surcharge, le système de commande (12) commande au moins une diode à luminescence (LED), de préférence un certain de nombre de diodes à luminescence (LED) de différentes couleurs.

18. Dispositif de commutation de protection selon l'une des revendications 1 à 17, **caractérisé en ce qu'**un dispositif de mesure de courant, de préférence un shunt de mesure (9) est prévu dans au moins une voie de courant (2, 3).

19. Dispositif de commutation de protection selon l'une des revendications 1 à 18, **caractérisé en ce qu'**il est prévu, comme dispositif de protection contre une inversion de polarité, un interrupteur de déclenchement comportant des diodes (D1 à D4) branchées à la manière d'un pont de Grätz, un transistor commandable (38; 38') étant branché dans une branche de diodes (D1, D2; D3, D4), tandis qu'à la sortie (P_{1,2}) du pont est disposée une bobine d'entraînement (27) qui pour l'interruption automatique est couplée à un interrupteur (31) par l'intermédiaire d'un circuit de verrouillage (28).

20. Dispositif de commutation de protection (19), **caractérisé en ce que**, dans le cas d'une polarité correcte, une interruption active est exécutée au moyen de la commande du transistor (38, 38').
